# EUROPEAN PATENT SPECIFICATION

(11) **EP 2 705 295 B1**
(45) Date of publication and mention of the grant of the patent: **20.01.2016**
(21) Application number: 12721883.2
(22) Date of filing: 19.04.2012
(51) Int. Cl.: F02M 21/02, B63H 21/38, F17C 13/00

(54) **A LIQUEFIED GAS OUTLET SYSTEM, A TANK FOR STORING LIQUEFIED GAS, A METHOD OF REBUILDING A LIQUEFIED GAS TANK AND A METHOD OF BUILDING A LIQUEFIED GAS TANK**
FLÜSSIGGASAUSLASSSYSTEM, TANK ZUR LAGERUNG VON FLÜSSIGGAS, VERFAHREN ZUM UMBAU EINES FLÜSSIGGASTANKS UND VERFAHREN ZUR HERSTELLUNG EINES FLÜSSIGGASTANKS
SYSTÈME DE SORTIE POUR DU GAZ LIQUÉFIÉ, RÉSERVOIR DESTINÉ AU STOCKAGE DE GAZ LIQUÉFIÉ, PROCÉDÉ DE RÉFECTION D'UN RÉSERVOIR À GAZ LIQUÉFIÉ ET PROCÉDÉ DE CONSTRUCTION D'UN RÉSERVOIR À GAZ LIQUÉFIÉ

(30) Priority: 04.05.2011 FI 20115420
(43) Date of publication of application: 12.03.2014
(73) Proprietor: Wärtsilä Finland Oy, 65380 Vaasa (FI)
(72) Inventor: BUI, Yves, IT 34100 Trieste (IT)
(74) Representative: Genip Oy
(86) International application number: PCT/FI2012/050387
(87) International publication number: WO 2012/150379

(56) References cited:
- WO-A1-94/29639
- WO-A1-2007/106988
- DE-A1-102006 025 656

## Description

### Technical field

The invention relates a liquefied gas outlet system for liquefied gas tank to discharge liquefied gas below its surface level in the tank, the outlet system comprising a first conduit section attached by its outer periphery at a location of a opening arranged to a wall section of the tank serving as an liquefied gas outlet, at least one second conduit section arranged in flow connection with the first conduit section, via which at least one second conduit section the first conduit section may be arranged in flow communication with the tank inner volume.

Invention also relates to a tank for storing liquefied gas.

Invention further relates to a method of building a liquefied gas tank and a method of rebuilding a liquefied gas tank.

### Background art

Gas is becoming more and more attractive fuel for ships' and other marine vessels' prime movers and auxiliary engines. Particularly but not exclusively natural gas (NG) is feasible due to its availability. Natural gas is a gaseous mixture in the ambient circumstances consisting primarily of methane and small amounts of ethane, propane, butane and nitrogen. It has high hydrogen content relative to coal, so when combusted it provides inter alia low amount of emissions, very clean burning process and it is basically free of contaminants. Particularly in cruise vessels, ferries and so called ropax vessels, where passengers are on board, the absence of soot emissions and visible smoke in the exhaust gases of ship's engines is very important feature facilitated by using NG as fuel for the engines but also for vessels carrying goods and bulk materials. Usually natural gas is stored as liquefied natural gas (LNG) at temperature of about -162°C, thus the storage cause problems particularly when the LNG is stored at high pressure, up to 10 bars, which is needed typically for supplying the gas at about 5 bar, which is the level that a gas operated piston engine requires. Considering that the tanks must typically be pressure vessels, which usually are built in cylindrical form, and that the volume of the tanks could be at the magnitude of say 100 - 1500 m³, arranging such large cylindrical tanks in a ship.

EP0069717 B1 discloses a system for utilising compressed boil-off gas from cryogenic liquids as fuel in a dual gas/oil burning diesel engine on board a vessel. In the system described in EP0069717 B1 the LNG is pumped from the storage tank via a lead-through at the top of the tank. This is a common practise based on a purpose of minimizing the possibilities of the LNG leaks. In practise this system, even if not shown in EP0069717 B1, requires LNG immersed pumps. That, on the other hand, makes the service and observation of the operation of the pumps extremely difficult.

WO 2008000898 discloses another fuel system for a gas driven piston engine in a marine vessel, in which gas is stored in at least one fuel storage tank in the marine vessel as liquefied gas, and which fuel system further comprises a separate fuel feed tank in connection with the fuel storage tank.

WO 9429639 A1 discloses a liquefied gas outlet system in a liquefied gas tank. There is a first conduit section, which is attached by its outer periphery at a location of an opening arranged to a wall section of the tank leading through the opening and serving as a liquefied gas outlet. There is also at least one second conduit section via which the first conduit section may be arranged in flow communication with the tank inner volume.

Liquefied gas storage in tanks creates a general risk of leakage and the severity of such occurrence, and required safety measures depends on the actual application.

It is an object of the invention to provide a liquefied gas outlet system for liquefied gas by means of which the risks relating to leak of liquefied gas are minimized.

It is also an object of the invention to provide a tank for storing liquefied gas by means of which the risks relating to leak of liquefied gas are minimized.

It is also an object of the invention to provide a method of rebuilding a liquefied gas tank by means of which the risks relating to leak of liquefied gas are minimized.

### Disclosure of the invention

Object of the invention are met substantially as is disclosed in claims 1, 10 and 11. The other claims present more details of different embodiments of the invention.

According to a preferred embodiment of the invention a liquefied gas outlet system for liquefied gas tank to discharge liquefied gas from below its surface level in the tank, the outlet system comprising a first conduit section attached by its outer periphery at a location of a opening arranged to a wall section of the tank serving as an liquefied gas outlet, at least one second conduit section arranged in flow connection with the first conduit section, via which at least one second conduit section the first conduit section may be arranged in flow communication with the tank inner volume. The system further comprises a safety vessel arranged to circumscribe the opening in a secured manner inside the tank, and that the safety vessel is also secured to the at least one second conduit, and that the second conduit section is provided with a closing unit.

According to an embodiment of the invention the safety vessel defines an inner space into which the first conduit section and at least one second conduit section are arranged to open.

According to another embodiment of the invention the least one second conduit section is arranged to open into the upper section of the inner space of safety vessel.

According to a still another embodiment of the invention the system comprises at least two second conduit sections are both arranged to open into the inner space of safety vessel.

According to a still another embodiment of the invention one of the second conduit sections is arranged to open into the upper section of the inner space of safety vessel.

According to a still another embodiment of the invention the system comprises a receptacle arranged to circumscribe the opening in a secured manner outside the tank, and that the receptacle is also secured to the first conduit section.

According to a still another embodiment of the invention the system is provided with leak detection means for providing an emergency closing function or the closing unit.

According to a still another embodiment of the invention the leak detection means is operationally connected to the closing unit.

According to a still another embodiment of the invention the system comprises a cavity separated from the LNG tank inner volume and extending from the upper wall of the tank to the closing unit providing an access to the closing unit.

Objects of the invention are also met by a tank for storing liquefied gas which is provided with a liquefied gas outlet system for liquefied gas tank to discharge liquefied gas from below its surface level in the tank, the outlet system comprising a first conduit section attached by its outer periphery at a location of a opening arranged to a wall section of the tank serving as an liquefied gas outlet, at least one second conduit section arranged in flow connection with the first conduit section, via which at least one second conduit section the first conduit section may be arranged in flow communication with the tank inner volume. The outlet system in the tank further comprises a safety vessel arranged to circumscribe the opening in a secured manner inside the tank, and that the safety vessel is also secured to the at least one second conduit, and that the second conduit section is provided with a closing unit.

The safety vessel has a function to limit the quantity of liquefied gas potentially capable of escaping through a leak occurring in the welding of the pipe connections going through the tank walls.

In is possible to use the invention in rebuilding a liquefied gas tank comprising a liquefied gas outlet conduit extending inside the tank from its bottom section to its upper section and which outlet is led through the upper wall of the tank, comprising the steps of arranging an opening to a wall section of the tank below its surface level serving as an liquefied gas outlet, attaching a first conduit section by its outer periphery at a location of the opening, arranging at least one second conduit section in flow connection with the first conduit section, via which at least one second conduit section the first conduit section may be arranged in flow communication with the tank inner volume, and arranging a safety vessel to circumscribe the opening in a secured manner inside the tank, securing the safety vessel also to the at least one second conduit and providing the second conduit section with a closing unit.

According a preferred embodiment of the invention the method of rebuilding a liquefied gas tank further comprises a step of arranging a receptacle to circumscribe the opening in a secured manner outside the tank, and the receptacle is also secured to the first conduit section.

Objects of the invention are also met by a method of building a liquefied gas tank comprising a liquefied gas outlet conduit extending inside the tank from its bottom section to its upper section and which outlet is led through the upper wall of the tank, characterized by the steps of arranging a opening to a wall section of the tank below its surface level serving as an liquefied gas outlet, attaching a first conduit section by its outer periphery at a location of the opening leading through the opening and, arranging at least one second conduit section via which the first conduit section may be arranged in flow communication with the tank inner volume, and arranging a safety vessel to circumscribe the opening in a secured manner inside the tank, the safety vessel defining an inner space into which the first conduit section and at least one second conduit section are arranged to open, securing the at least one second conduit to the safety vessel and providing the second conduit section with a closing unit.

According a preferred embodiment of the invention the method of building a liquefied gas tank further comprises a step of arranging a receptacle to circumscribe the opening in a secured manner outside the tank, and that the receptacle is also secured to the first conduit section.

The invention provides several advantages. With the present invention the risks relating the leakage are minimized. With the present invention it is possible to avoid using submerged cryogenic pumps, generally duplicated for redundancy, inside the tanks. The invention also allows usage of external pumps which can be cross-connected to tanks for increasing the redundancy.

This invention qualifies the single wall pressurized tanks for a discharge of the liquefied gas below the level of the liquid by arranging a simple and safe double containment in the form of the safety vessel. Thus the single wall tanks can be fitted e.g. with man hole inspection at the top of the tank.

This invention also avoids a need of building a secondary barrier around the gas processing room making the system more simple and giving a great flexibility in arranging the gas processing room in a ship design.

### Brief Description of Drawings

In the following the invention will be described with the reference to the accompanying schematic drawings, in which
- Figure 1: illustrates a tank for storing liquefied gas according to an embodiment of the invention,
- Figure 2: illustrates a liquefied gas outlet system according to an embodiment of the invention,
- Figure 3: illustrates a liquefied gas outlet system according to an embodiment of the invention, and
- Figure 4: illustrates a liquefied gas outlet system according to still another embodiment of the invention.

### Best mode for carrying out the invention

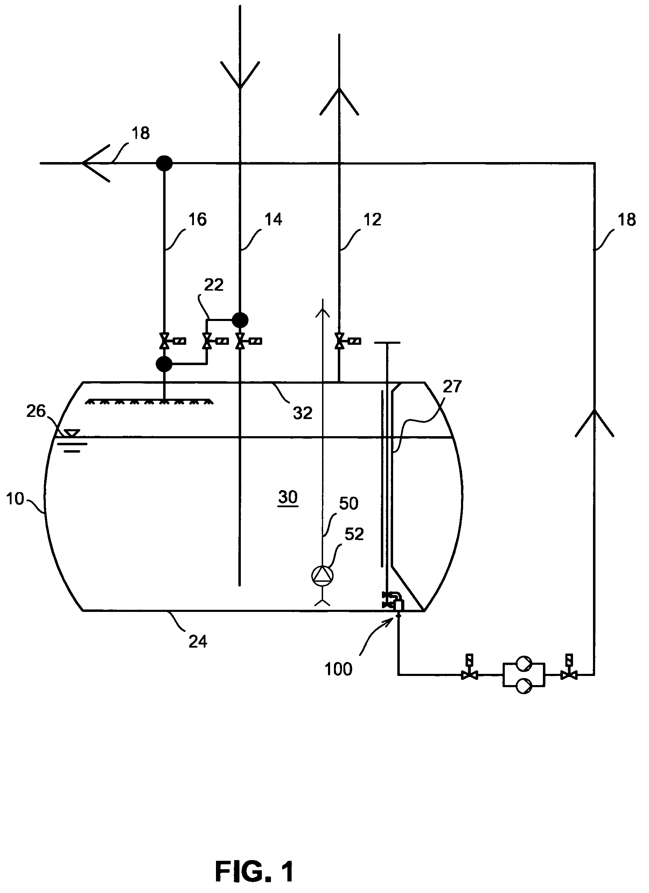

Figure 1 describes a tank 10 for storing liquefied gas, such as liquefied natural gas (LNG) in a schematic manner. The tank is provided with a gas outlet conduit 12 opening into the upper part (ullage space) of the tank 10. There is also a filling conduit 14 connected to the bottom part of the tank for bringing liquefied gas into the tank. The tank includes also a feeding conduit 18 through which liquefied gas may be transported to further treatment or for use. The feeding conduit has a branch leading back to the ullage space of the tank 10 and being provided with a spraying system. As can be seen from the figure 1 the filling conduit 14 may also be connected to the spraying system via a connection conduit 22.

In the system the feeding conduit 18 is connected to a liquefied gas outlet system 100 arranged to the bottom wall 24 of the tank 10. The liquefied gas outlet system 100 is arranged for discharging liquefied gas below its surface level 26 in the tank 10 providing a minimized harm or damages in case of a leakage. As is depicted in the figure 1 the liquefied gas outlet system 100 comprises a support system 27 for supporting eg. operating shaft(s) of the liquefied gas outlet system 100. It is to be understood that only some basic elements necessary for understanding the invention and relating to the tank 10 are shown in the figure 1.

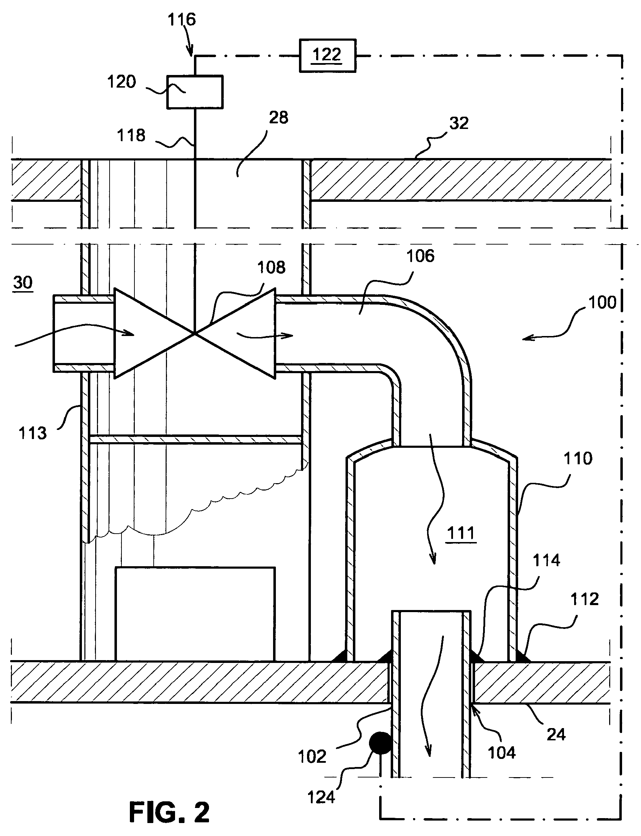

A liquefied gas outlet system 100 according to an embodiment of the invention is shown in the figure 2. The outlet system 100 comprises a first conduit section 102, which is attached into an opening 104 in the wall section, here a bottom wall, 24 of the tank 10. With the outlet system serving as a liquefied gas outlet the liquefied gas in the tank 10 may be discharged i.e. used as normal gas pick-up at a location below its surface level in the tank in a safe and reliable manner.

The first conduit section 102 is attached by its outer periphery at a location of the opening 104 to the wall 24 of the tank. As shown in the figure 2 the first conduit section 102 preferably leads through the opening 104 and is attached, such as welded thereto. The outlet system 100 comprises further at least one second conduit section 106 arranged in flow connection with the first conduit section 102. The at least one second conduit 106 is arranged to open into the inner volume 30, so that also the first conduit section may be arranged in flow communication with the tank inner volume 30. The at least one second conduit section is also provided with a closing unit 108, such as a valve, by means of which the flow communication between the tank inner volume 30 and the first conduit section 102 may be closed or opened. In the following the closing unit is referred to as valve using the same reference number for clarity reasons. It is to be understood that the closing unit may have a different realization provided that it performs substantially same operation as described here referring to the valve and its possible auxiliaries.

The attachment of the first conduit section to the wall 24 may be susceptible to leakage. Thus, the system comprises a safety vessel 110 which is arranged to circumscribe the opening 104 in a secured manner inside the tank 10. The safety vessel 110 is thus arranged so that its joint 112 to the bottom wall 24 of the tank may not allow the liquefied gas to flow through the joint. Additionally the safety vessel 110 is also secured to the at least one second conduit 106 to its first end and the closing unit has been arranged to the second end or between the first end and the second end. The safety vessel 110 thus defines an inner space 11 into which the first conduit section and at least one second conduit section are arranged to open.

Preferably the first conduit section, the second conduit section and the safety vessel are of circular cross section.

The liquefied gas outlet system 100 is preferably operated so that during a normal operation the valve 108 is open and the liquefied gas may flow through the system as the operation requires and controlled by any suitable means. Now, in case a leakage is detected in the joint 114 made to attach the first conduit section 102 to the opening 104 in the wall 24, the valve 108 is arranged to close. After closing the valve 108 the flow of liquefied gas is stopped. And, by the effect of the safety vessel 110 also the leakage is limited to the amount of internal volume of the safety vessel and the first conduit section 102, and the second conduit section 106 downstream the valve 108.

In the embodiment of figure 2 the second conduit section 106 joins the safety vessel 110 at its horizontally highest point thus for example during the initial filling of the tank 10 all possible gaseous substances may exit the safety vessel in unobstructed manner.

Figure 2 also illustrates a further embodiment of the invention according to which the system is provided with a cavity 28 which forms a space separated from the LNG tank inner volume 30 and which extending from and through the upper wall 32 of the tank to the closing unit 108 providing an access to the closing unit. The cavity is formed by a valve well 113 having side walls forming a closed perimeter. As can be also seen from the figure 2 the valve well 113 is arranged above the bottom wall 24 of the tank, thus it does not pose a leaking risk at all. The second conduit section 106 is arranged to extend through the valve well 113 so that the valve is inside the well and the second conduit section opens into the tank space 30.

According to an embodiment of the invention the closing unit is provided with an actuation system 116, which is arranged to cause the closing of the closing unit in case of leak in the joint 114 occurs. The actuation system comprises in the embodiment of figure 2 an operating shaft 118 coupled to the valve 108 and an actuator unit 120 to operate the shaft. The system comprises also a leak detection means 124 arranged to detect if a leak in the joint 114 takes place. The leak detection means is connected to a control unit 122 which in turn is arranged to control the operation of the actuator unit 120.

Now, referring to figures 1 and 2 a method of building a liquefied gas tank 10 is described. The tank in the figures comprises liquefied gas outlet conduit 50 extending inside the tank 10 from it bottom section to its upper section and which outlet is led through the upper wall 32 of the tank. The liquefied gas outlet conduit 50 comprises a cryogenic pump 52, which is submerged in the liquefied gas. It makes the operation circumstances very harsh and particularly the maintenance work of the pump 52 extremely difficult.

According to an embodiment of the invention the method of building or rebuilding a liquefied gas tank 10 comprises the steps of arranging a opening 104 (fig 2) to a wall section 24 of the tank below its surface level serving as an liquefied gas outlet, attaching a first conduit section 102 by its outer periphery at a location of the opening 104, arranging at least one second conduit section 106 in flow connection with the first conduit section, via which at least one second conduit section the first conduit section may be arranged in flow communication with the tank inner volume 30, and arranging a safety vessel 110 to circumscribe the opening 104 in a secured manner inside the tank, and securing the safety vessel also to the at least one second conduit 106.

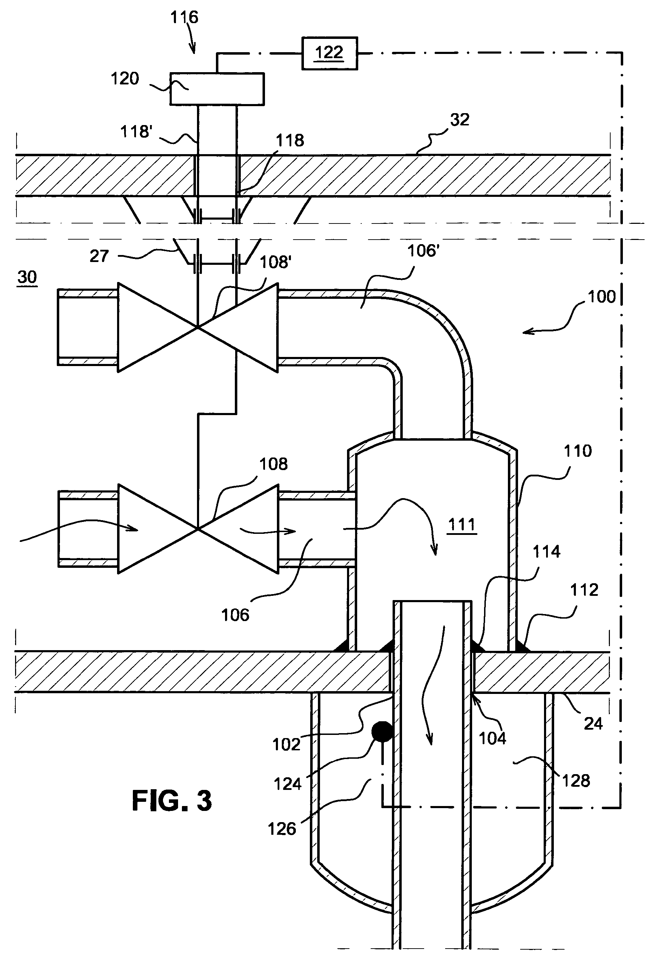

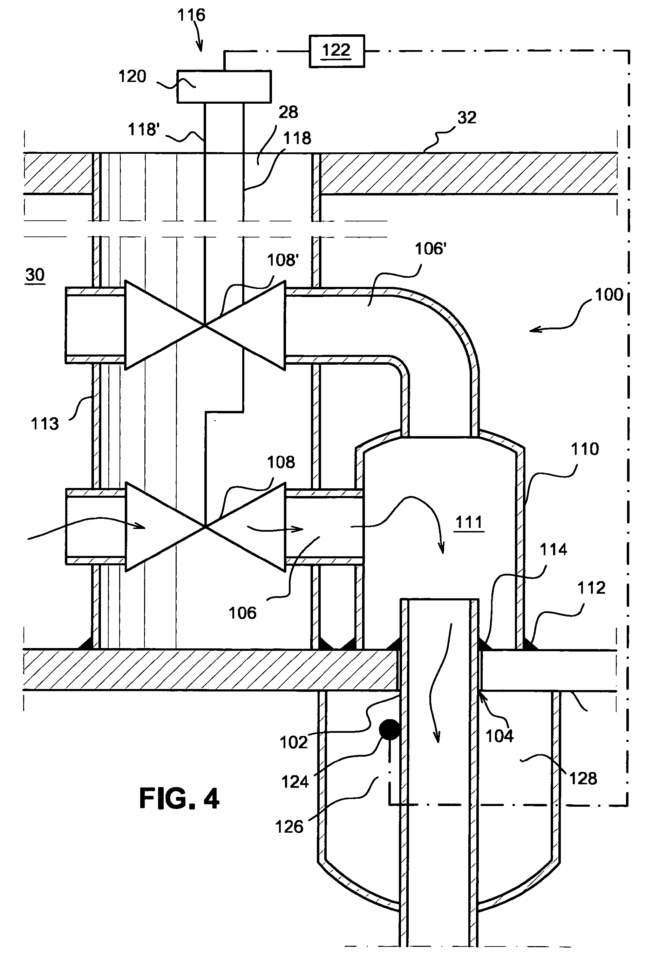

In figure 3 there is shown another embodiment of the invention. There some features common to the embodiment shown in figure 4 and therefore same reference numbers for those are also used. The outlet system 100 comprises also in this case a first conduit section 102, which is attached into an opening 104 in the bottom wall 24 of the tank 10.

The first conduit section 102 is attached by its outer periphery at a location of the opening 104 to the wall 24 of the tank. As shown in the figure 3 the first conduit section 102 preferably leads through the opening 104 and is attached thereto. The outlet system 100 comprises further a main second conduit section 106, and a branch second conduit section 106' arranged in flow connection with the first conduit section 102. Here the main second conduit section 106 and the branch second conduit section 106' are in parallel coupling with each other. Both of the conduits of the second conduit section 106, 106' is arranged to open into the tank inner volume 30, so both of the conduits 106, 106' may be arranged in flow communication with the tank inner volume 30 as well. Both of the conduits are also provided with a closing unit 108, 108', such as a valve, by means of which the flow communication between the tank inner volume 30 and the first conduit section 102 may be closed or opened. In the following the closing unit is referred to as valve using the same reference number for clarity reasons. It is to be understood that the closing units may have a different realization provided that it performs substantially same operation as described here referring to the valve and its possible auxiliaries.

The system comprises also a safety vessel 110 which is arranged to circumscribe the opening 104 in a secured manner inside the tank 10. The safety vessel 110 is thus arranged so that its joint 112 to the bottom wall 24 of the tank doesn't allow the liquefied gas to flow through the joint. Additionally the safety vessel 110 is secured to the main second conduit section 106 and to the branch second conduit section 106' as well.

The liquefied gas outlet system 100 is operated in a manner described in connection with figure 4 which is explained later below.

In the embodiment of figure 3 the branch second conduit section 106' joins the safety vessel 110 at its horizontally highest point thus for example during the initial filling of the tank 10 all possible gaseous substances may exit the safety vessel in unobstructed manner. The main second conduit section 106 is arranged to join the safety vessel 110 preferably as close to the tank bottom wall 24 as possible, which maximizes the available effective volume of the tank. The main second conduit sec-tion 106 is used primarily in the normal operation and the branch second conduit section 106' increases the redundancy of the system considerably.

According to an embodiment of the invention the branch second conduit section 106' is considerably smaller in size compared to the main second conduit section 106. In this case the branch second conduit section 106' may be used only or mainly to allow the exit of possible gaseous substances from the safety vessel during the filling of the tank and during the normal operation the valve 108' is closed.

Figure 3 also illustrates a further embodiment of the invention according to which the valves 108.108' are arranged in direct contact with the liquefied gas in the tank. There are operating shafts 118, 118' coupled to the valves 108, 108' which are led through the tank also in direct contact with the liquefied gas. However, since the length of the shafts is substantially long and the movement of the liquefied gas in the tank causes forces against the shaft they a provided with a support system 27 having one or more intermediate supports and a protection against the sloshing of the liquefied gas due to the ship movements.

In any of the configurations, the shafts 118 and 118' shall be advantageously designed with an expansion part allowing the shaft dimension variations created by the temperature difference during the life of the tank from ambient temperature during the building to the -162°C when the tank is filled with liquefied gas.

According to an embodiment of the invention the closing unit is also provided with an actuation system 116, which is arranged to cause the closing of the closing unit in case of leak in the joint 114 occurs. The actuation system comprises in the embodiment of figure 4 operating shafts 118, 118' coupled to the valves 108, 108' and an actuator unit 120 to operate the shafts. The valves 108 and/or 108' can be operated manually and/or with the actuator. The system comprises also a leak detection means 124 arranged to detect if a leak in the joint 114 takes place. The leak detection means is connected to a control unit 122 which in turn is arranged to control the operation of the actuator unit 120. The actuation may also take place by manual operation.

In the embodiment of figure 3 there is also a receptacle 126 arranged to circumscribe the opening 104 in a secured manner outside the tank at its bottom wall 24. The receptacle is also secured to the first conduit section 102 forming a space 128 limited by the receptacle, the tank wall 24 and the first conduit section.

Advantageously the receptacle 126 dimensioned so that it is able to withhold all liquid in conduits 106, 106' and vessel 110 after closing the valves 108, 108' i.e. the volume of the receptacle 126 is equal or greater than the combine volumes of the vessel and the conduit sections downstream the valves 108,108' and the flow of liquefied gas passing through the valves during the time of closing of the valves by the actuator. In the embodiment of figure 3 the leak detection means 124 is arranged in the space 128. In this case should a leakage occur in the in the joint 114, the leak detection means 124 in the space 128 detects the leak and the valve 108 is arranged to close and the valve 108' in case it is open. After closing the valve(s) 108 the flow of liquefied gas is stopped. And, by the effect of the safety vessel 110 also the leakage is limited to the amount of internal volume of the safety vessel and the first conduit section 102, and the second conduit section 106 downstream the valve 108

The liquefied gas outlet system 100 described in the figure 3 is operated in a same manner as the embodiment shown in figure 4 and explained in the following.

In figure 4 there is shown another embodiment of the invention. There some features common to the embodiment shown in figure 2 and therefore same reference numbers for those are also used. The outlet system 100 comprises also in this case a first conduit section 102, which is attached into an opening 104 in the bottom wall 24 of the tank 10.

The first conduit section 102 is attached by its outer periphery at a location of the opening 104 to the wall 24 of the tank. As shown in the figure 4 the first conduit section 102 preferably leads through the opening 104 and is attached thereto. The outlet system 100 comprises further a main second conduit section 106, and a branch second conduit section 106' arranged in flow connection with the first conduit section 102. Here the main second conduit section 106 and the branch second conduit section 106' are in parallel coupling with each other. Both of the conduits of the second conduit section 106, 106' is arranged to open into the tank inner volume 30, so both of the conduits 106, 106' may be arranged in flow communication with the tank inner volume 30 as well. Both of the conduits are also provided with a closing unit 108, 108', such as a valve, by means of which the flow communication between the tank inner volume 30 and the first conduit section 102 may be closed or opened. In the following the closing unit is referred to as valve using the same reference number for clarity reasons. It is to be understood that the closing units may have a different realization provided that it performs substantially same operation as described here referring to the valve and its possible auxiliaries.

The attachment of the first conduit section to the wall 24 may be susceptible to leakage. Thus, the system comprises also a safety vessel 110 which is arranged to circumscribe the opening 104 in a secured manner inside the tank 10. The safety vessel 110 is thus arranged so that its joint 112 to the bottom wall 24 of the tank doesn't allow the liquefied gas to flow through the joint. Additionally the safety vessel 110 is also secured to the main second conduit section 106 and to the branch second conduit section 106' as well.

The liquefied gas outlet system 100 is preferably operated so that during a normal operation at least one of the valves 108,108' is open and the liquefied gas may flow through the system as the operation requires and controlled by any suitable means. Now, in case a leakage is detected in the joint 114 made to attach the first conduit section 102 to the opening 104 in the wall 24, the valves 108, 108' are arranged to close at the latest at this stage. After closing the valves 108, 108' the flow of liquefied gas is stopped. And, by the effect of the safety vessel 110 also the leakage is limited to the amount of internal volume of the safety vessel and the first conduit section 102, and the second conduit section 106, 106' downstream the valves 108, 108'.

In the embodiment of figure 4 the branch second conduit section 106' joins the safety vessel 110 at its horizontally highest point thus for example during the initial filling of the tank 10 all possible gaseous substances may exit the safety vessel in unobstructed manner. The main second conduit section 106 is arranged to join the safety vessel 110 preferably as close to the tank bottom wall 24 as possible, which maximizes the available effective volume of the tank. The main second conduit section 106 is used primarily in the normal operation and the branch second conduit section 106' increases the redundancy of the system considerably.

According to an embodiment of the invention the branch second conduit section 106' is considerably smaller in size compared to the main second conduit section 106. In this case the branch second conduit section 106' may be used only or mainly to allow the exit of possible gaseous substances from the safety vessel during the filling of the tank and during the normal operation the valve 108' is closed.

Figure 4 also illustrates a further embodiment of the invention according to which the system is provided with a cavity 28 which forms a space separated from the LNG tank inner volume 30 and which extending from and through the upper wall 32 of the tank to the closing unit 108 providing an access to the closing unit. The cavity comprises a valve well 112 having side walls forming a closed perimeter. As can be also seen from the figure 4 that even if the cavity extends to the bottom wall 24 the valve well 112 is arranged above the bottom wall 24, thus it does not pose a leaking risk at all.

According to an embodiment of the invention the closing unit is also provided with an actuation system 116, which is arranged to cause the closing of the closing unit in case of leak in the joint 114 occurs. The actuation system comprises in the embodiment of figure 4 operating shafts 118, 118' coupled to the valves 108, 108' and an actuator unit 120 to operate the shafts. The valves 108 and/or 108' can also be manually operated in conjunction or independently from the actuator. The system comprises also a leak detection means 124 arranged to detect if a leak in the joint 114 takes place. The leak detection means is connected to a control unit 122 which in turn is arranged to control the operation of the actuator unit 120.

In the embodiment of figure 4 there is also a receptacle 126 arranged to circumscribe the opening 104 in a secured manner outside the tank at its bottom wall 24. The receptacle is also secured to the first conduit section 102 forming a space 128 limited by the receptacle, the tank wall 24 and the first conduit section.

Advantageously the receptacle 126 dimensioned so that it is able to withhold all liquid in conduits 106, 106' and vessel 110 after closing the valves 108, 108' i.e. the volume of the receptacle 126 is equal or greater than the combine volumes of the vessel and the conduit sections downstream the valves 108,108' and the quantity of liquefied gas subject to flow out during the time of closing of the valves 108 . In the embodiment of figure 4 the leak detection means 124 is arranged in the space 128. In this case should a leakage occur in the in the joint 114, the leak detection means 124 in the space 128 detects the leak and the valve 108 is arranged to close (and the valve 108' in case it is open). After closing the valve(s) 108 the flow of liquefied gas is stopped. And, by the effect of the safety vessel 110 also the leakage is limited to the amount of internal volume of the safety vessel and the first conduit section 102, and the second conduit section 106 downstream the valve 108.

According to an embodiment of the invention the leak detection means 124 is a pressure sensor. Due to the entering of the liquefied gas into the space 128 the pressure therein increases as an indication of the leak.

According to another embodiment of the invention the leak detection means 124 is is a temperature sensor. Due to the entering of the extremely cold liquefied gas into the space 128 the temperature of the receptacle decreases as an indication of the leak.

The measurement signal from the sensor is transmitted to the control unit 122 which controls the position(s) of the valve(s) accordingly.

It is to be noted that only a few most advantageous embodiments of the invention have been described in the above. Thus, it is clear that the invention is not limited to the above-described embodiments, but may be applied in many ways within the scope of the appended claims. The features disclosed in connection with various embodiments can also be used in connection with other embodiments within the inventive scope and/or different assemblies can be combined from the disclosed features, should it be desired and should it be technically feasible.

## Claims

1. A liquefied gas outlet system (100) in liquefied gas tank to discharge liquefied gas from below its surface level in the tank (10), the outlet system comprising a first conduit section (102) attached by its outer periphery at a location of an opening (104) arranged to a wall section (24) of the tank leading through the opening (104) and serving as a liquefied gas outlet, at least one second conduit section (106, 106'), via which the first conduit section may be arranged in flow communication with the tank inner volume (30), **characterized in that** the system further comprises a safety vessel (110) arranged to circumscribe the opening (104) in a secured manner inside the tank, and that the safety vessel is also secured to the at least one second conduit section (106, 106') so that the safety vessel (110) defines an inner space (111) into which the first conduit section and at least one second conduit section are arranged to open, and that the second conduit section is provided with a closing unit (108, 108').

2. A liquefied gas outlet system according to claim 1, **characterized in that** the safety vessel (110) defines an inner space (111) into which the first conduit section and at least one second conduit section are arranged to open.

3. A liquefied gas outlet system according to claim 2, **characterized in that** the least one second conduit section is arranged to open into the upper section of the inner space (111) of safety vessel.

4. A liquefied gas outlet system according to claim 2, **characterized in that** the system comprises at least two second conduit sections (106,106') both arranged to open into the inner space of safety vessel (110).

5. A liquefied gas outlet system according to claim 4, **characterized in that** one of the second conduit sections (106') is arranged to open into the upper section of the inner space (111) of safety vessel.

6. A liquefied gas outlet system according to anyone of the preceding claims 1-5, **characterized in that** the system comprises a receptacle (126) arranged to circumscribe the opening (104) in a secured manner outside the tank, and that the receptacle is also secured to the first conduit section (102).

7. A liquefied gas outlet system according to claim 1 or 6, **characterized in that** the system is provided with leak detection means (124).

8. A liquefied gas outlet system according to claim 7, **characterized in that** the leak detection means (124) is operationally connected to the closing unit (108,108') for providing an emergency closing.

9. A liquefied gas outlet system according to anyone of the preceding claims, **characterized in that** the system comprises a cavity (28) separated from the LNG tank inner volume (30) and extending from the upper wall of the tank to the closing unit providing an access to the closing unit.

10. A tank for storing liquefied gas, **characterized in that** the tank is provided with a liquefied gas outlet system (100) according to anyone of the preceding claims 1-9.

11. A method of building a liquefied gas tank (10) comprising a liquefied gas outlet conduit extending inside the tank from its bottom section to its upper section and which outlet is led through the upper wall of the tank, **characterized by** the steps of arranging a opening (104) to a wall section (24) of the tank below its surface level serving as an liquefied gas outlet, attaching a first conduit section (102) by its outer periphery at a location of the opening leading through the opening (104) and, arranging at least one second conduit section (106, 106') via which the first conduit section may be arranged in flow communication with the tank inner volume, and arranging a safety vessel (110) to circumscribe the opening (104) in a secured manner inside the tank, the safety vessel (110) defining an inner space (111) into which the first conduit section and at least one second conduit section are arranged to open , securing the at least one second conduit (106, 106') to the safety vessel (126) and providing the second conduit section (106,106') with a closing unit (108,108').

12. A method of building a liquefied gas tank according to claim 11, **characterized in that** the method further comprises a step of arranging a receptacle (126) to circumscribe the opening in a secured manner outside the tank, and that the receptacle is also secured to the first conduit section.

## Patentansprüche

1. Flüssiggas-Auslasssystem (100) in einem Flüssiggastank zum Ablassen von Flüssiggas von unterhalb seines Oberflächenspiegels im Tank (10), wobei das Auslasssystem einen ersten Leitungsabschnitt (102), der mittels seines Außenumfangs an einer Position einer in einem Wandabschnitt (24) des Tanks angeordneten Öffnung (104) angebracht ist, durch die Öffnung (104) hindurchführt und als ein Flüssiggasauslass dient, und wenigstens einen zweiten Leitungsabschnitt (106, 106'), über welchen der erste Leitungsabschnitt in Fließverbindung mit dem Tankinnenvolumen (30) angeordnet werden kann, umfasst, **dadurch gekennzeichnet, dass** das System ferner ein Sicherheitsgefäß (110) umfasst, das so angeordnet ist, dass es die Öffnung (104) auf eine gesicherte Weise innerhalb des Tanks umgibt, und dass das Sicherheitsgefäß auch an dem wenigstens einen zweiten Leitungsabschnitt (106, 106') befestigt ist, so dass das Sicherheitsgefäß (110) einen inneren Raum (111) definiert, wobei der erste Leitungsabschnitt und wenigstens ein zweiter Leitungsabschnitt so angeordnet sind, dass sie in diesen münden, und dass der zweite Leitungsabschnitt mit einer Schließeinheit (108, 108') versehen ist.

2. Flüssiggas-Auslasssystem nach Anspruch 1, **dadurch gekennzeichnet, dass** das Sicherheitsgefäß (110) einen inneren Raum (111) definiert, wobei der erste Leitungsabschnitt und wenigstens ein zweiter Leitungsabschnitt so angeordnet sind, dass sie in diesen münden.

3. Flüssiggas-Auslasssystem nach Anspruch 2, **dadurch gekennzeichnet, dass** der wenigstens eine zweite Leitungsabschnitt so angeordnet ist, dass er in den oberen Abschnitt des inneren Raumes (111) des Sicherheitsgefäßes mündet.

4. Flüssiggas-Auslasssystem nach Anspruch 2, **dadurch gekennzeichnet, dass** das System wenigstens zwei zweite Leitungsabschnitte (106, 106') umfasst, die beide so angeordnet sind, dass sie in den inneren Raum des Sicherheitsgefäßes (110) münden.

5. Flüssiggas-Auslasssystem nach Anspruch 4, **dadurch gekennzeichnet, dass** einer der zweiten Leitungsabschnitte (106') so angeordnet ist, dass er in den oberen Abschnitt des inneren Raumes (111) des Sicherheitsgefäßes mündet.

6. Flüssiggas-Auslasssystem nach einem der vorhergehenden Ansprüche 1-5, **dadurch gekennzeichnet, dass** das System einen Aufnahmebehälter (126) umfasst, der so angeordnet ist, dass er die Öffnung (104) auf eine gesicherte Weise außerhalb des Tanks umgibt, und dass der Aufnahmebehälter auch an dem ersten Leitungsabschnitt (102) befestigt ist.

7. Flüssiggas-Auslasssystem nach Anspruch 1 bis 6, **dadurch gekennzeichnet, dass** das System mit Leckerkennungsmitteln (124) versehen ist.

8. Flüssiggas-Auslasssystem nach Anspruch 7, **dadurch gekennzeichnet, dass** die Leckerkennungsmittel (124) mit der Schließeinheit (108, 108') in Wirkverbindung stehen, um ein Notschließen zu gewährleisten.

9. Flüssiggas-Auslasssystem nach einem der vorhergehenden Ansprüche, **dadurch gekennzeichnet, dass** das System einen Hohlraum (28) umfasst, der vom Innenvolumen (30) des Flüssigerdgastanks getrennt ist und sich von der oberen Wand des Tanks bis zur Schließeinheit erstreckt, wobei er einen Zugang zu der Schließeinheit ermöglicht.

10. Tank zum Speichern von Flüssiggas, **dadurch gekennzeichnet, dass** der Tank mit einem Flüssiggas-Auslasssystem (100) nach einem der vorhergehenden Ansprüche 1-9 versehen ist.

11. Verfahren zum Herstellen eines Flüssiggastanks (10), der eine Flüssiggas-Auslassleitung umfasst, die sich innerhalb des Tanks von seinem unteren Abschnitt bis zu seinem oberen Abschnitt erstreckt, und wobei dieser Auslass durch die obere Wand des Tanks hindurchgeführt ist, **gekennzeichnet durch** die folgenden Schritte: Anordnen einer Öffnung (104) in einem Wandabschnitt (24) des Tanks unterhalb seines Oberflächenspiegels, welche als ein Flüssiggasauslass dient, Anbringen eines ersten Leitungsabschnitts (102) mittels seines Außenumfangs an einer Position der Öffnung, der **durch** die Öffnung (104) hindurchführt, und Anordnen wenigstens eines zweiten Leitungsabschnitts (106, 106'), über welchen der erste Leitungsabschnitt in Fließverbindung mit dem Tankinnenvolumen angeordnet werden kann, und Anordnen eines Sicherheitsgefäßes (110), so dass es die Öffnung (104) auf eine gesicherte Weise innerhalb des Tanks umgibt, wobei das Sicherheitsgefäß (110) einen inneren Raum (111) definiert, wobei der erste Leitungsabschnitt und wenigstens ein zweiter Leitungsabschnitt so angeordnet sind, dass sie in diesen münden, Befestigen des wenigstens einen zweiten Leitungsabschnitts (106, 106') an dem Sicherheitsgefäß (126) und Versehen des zweiten Leitungsabschnitts (106, 106') mit einer Schließeinheit (108, 108').

12. Verfahren zum Herstellen eines Flüssiggastanks nach Anspruch 11, **dadurch gekennzeichnet, dass** das Verfahren ferner einen Schritt des Anordnens eines Aufnahmebehälters (126), so dass er die Öffnung auf eine gesicherte Weise außerhalb des Tanks umgibt, und dass der Aufnahmebehälter auch an dem ersten Leitungsabschnitt befestigt ist, umfasst.

## Revendications

1. Système de sortie de gaz liquéfié (100) dans un réservoir de gaz liquéfié pour évacuer du gaz liquéfié depuis le dessous de son niveau de surface dans le réservoir (10), le système de sortie comprenant une première section de conduit (102) fixée par sa périphérie extérieure à un endroit d'une ouverture (104) disposée sur une section de paroi (24) du réservoir menant à travers l'ouverture (104) et servant de sortie de gaz liquéfié, au moins une deuxième section de conduit (106, 106') par laquelle la première section de conduit peut être agencée en communication d'écoulement avec le volume intérieure de réservoir (30), **caractérisé en ce que** le système comprend en plus une cuve de sécurité (110) agencée pour circonscrire l'ouverture (104) d'une manière solidement fixée à l'intérieur du réservoir et **en ce que** la cuve de sécurité est également solidement fixée à au moins une deuxième section de conduit (106, 106') de sorte que la cuve de sécurité (110) définit un espace intérieur (111) dans lequel la première section de conduit et au moins une deuxième section de conduit sont agencées pour s'ouvrir et **en ce que** la deuxième section de conduit est dotée d'une unité de fermeture (108, 108').

2. Système de sortie de gaz liquéfié selon la revendication 1 **caractérisé en ce que** la cuve de sécurité (110) définit un espace intérieur (111) dans lequel la première section de conduit et au moins une deuxième section de conduit sont agencées pour s'ouvrir.

3. Système de sortie de gaz liquéfié selon la revendication 2 **caractérisé en ce qu'**au moins une deuxième section de conduit est agencée pour s'ouvrir dans la section supérieure de l'espace intérieur (111) de la cuve de sécurité.

4. Système de sortie de gaz liquéfié selon la revendication 2 **caractérisé en ce que** le système comprend au moins deux sections de conduit (106, 106'), toutes les deux agencées pour s'ouvrir dans l'espace intérieur de la cuve de sécurité (110).

5. Système de sortie de gaz liquéfié selon la revendication 4 **caractérisé en ce qu'**une des deuxièmes sections de conduit (106') est agencée pour s'ouvrir dans la section supérieure de l'espace intérieur (111) de la cuve de sécurité.

6. Système de sortie de gaz liquéfié selon l'une quelconque des revendications précédentes 1-5 **caractérisé en ce que** le système comprend un récipient (126) agencé pour circonscrire l'ouverture (104) d'une manière solidement fixée à l'extérieur du réservoir et **en ce que** le récipient est également fixé à la première section de conduit (102).

7. Système de sortie de gaz liquéfié selon la revendication 1 ou 6 **caractérisé en ce que** le système est doté d'un moyen de détection de fuite (124).

8. Système de sortie de gaz liquéfié selon la revendication 7 **caractérisé en ce que** le moyen de détection de fuite (124) est raccordé de façon opérationnelle à l'unité de fermeture (108, 108') pour fournir une fermeture d'urgence.

9. Système de sortie de gaz liquéfié selon l'une quelconque des revendications précédentes **caractérisé en ce que** le système comprend une cavité (28) séparée du volume intérieur de réservoir de GNL (30) et s'étendant de la paroi supérieure du réservoir à l'unité de fermeture fournissant ainsi un accès à l'unité de fermeture.

10. Réservoir pour stocker du gaz **caractérisé en ce que** le réservoir est doté d'un système de sortie de gaz liquéfié (100) selon l'une quelconque des revendications précédentes 1-9.

11. Procédé de construction d'un réservoir de gaz liquéfié (10) comprenant un conduit de sortie de gaz liquéfié s'étendant à l'intérieur du réservoir depuis sa section de fond à sa section supérieure et laquelle sortie est dirigée à travers la paroi supérieure du réservoir **caractérisé par** les étapes d'agencement d'une ouverture (104) sur une section de paroi (24) du réservoir en dessous de son niveau de surface servant de sortie de gaz liquéfié, de fixation d'une première section de conduit (102) par sa périphérie extérieure à un endroit de l'ouverture menant àtravers l'ouverture (104) et de l'agencement d'au moins une deuxième section de conduit (106, 106') par laquelle la première section de conduit peut être agencée en communication d'écoulement avec le volume intérieur du réservoir et de l'agencement d'une cuve de sécurité (110) pour circonscrire l'ouverture (104) d'une manière solidement fixée à l'intérieur du réservoir, la cuve de sécurité (110) définissant un espace intérieur (111) dans lequel la première section de conduit et au moins une deuxième section de conduit sont agencées pour s'ouvrir, de la fixation d'au moins un deuxième conduit (106, 106') à la cuve de sécurité (126) et de la fourniture de la deuxième section de conduit (106, 106') avec une unité de fermeture (108, 108').

12. Procédé de construction d'un réservoir de gaz liquéfié selon la revendication 11 **caractérisé en ce que** le procédé comprend en plus une étape d'agencement d'un récipient (126) pour circonscrire l'ouverture d'une manière solidement fixée à l'extérieur du réservoir et **en ce que** le récipient est également fixé solidement à la première section de conduit.
